(19) Europäisches Patentamt / European Patent Office / Office européen des brevets

(11) **EP 4 679 035 A1**

(12) **EUROPEAN PATENT APPLICATION**
published in accordance with Art. 153(4) EPC

(43) Date of publication:
**14.01.2026 Bulletin 2026/03**

(21) Application number: **24767222.3**

(22) Date of filing: **07.03.2024**

(51) International Patent Classification (IPC):
**G01C 19/00** (2013.01)    **G01P 15/18** (2013.01)
**G01P 21/00** (2006.01)

(52) Cooperative Patent Classification (CPC):
**G01C 19/00; G01P 15/18; G01P 21/00**

(86) International application number:
**PCT/JP2024/008842**

(87) International publication number:
**WO 2024/185856 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2023 JP 2023034992**

(71) Applicant: **Sumitomo Precision Products Co., Ltd.
Hyogo 660-0891 (JP)**

(72) Inventor: **MORIGUCHI, Takafumi
Amagasaki-shi, Hyogo 660-0891 (JP)**

(74) Representative: **Viering, Jentschura & Partner
mbB
Patent- und Rechtsanwälte
Am Brauhaus 8
01099 Dresden (DE)**

(54) **METHOD FOR CORRECTING ANGULAR VELOCITY SENSOR, PROGRAM FOR CORRECTING ANGULAR VELOCITY SENSOR, AND ANGULAR VELOCITY SENSOR SYSTEM**

(57) An angular velocity sensor correction method includes acquiring a plurality of types of measurement values of angular velocities about each of three axes from outputs of an angular velocity sensor configured to measure the angular velocities about the three axes while being changed to a plurality of attitudes. Furthermore, the angular velocity sensor correction method includes calculating correction values for correcting the outputs of the angular velocities about the three axes of the angular velocity sensor based on a latitude in each of the plurality of attitudes calculated using the measurement values of the angular velocities acquired in each of the plurality of attitudes and an attitude angle indicating an inclination of the angular velocity sensor in each of the plurality of attitudes, and an actual latitude value indicating an actual latitude.

*FIG.7*

```
START
  │
  ▼
RECEIVE OPERATION TO START CALIBRATION OPERATION          S1
  │
  ▼
ACQUIRE FIRST MEASUREMENT VALUES                          S2
  │
  ▼
ACQUIRE FIRST ATTITUDE ANGLE                              S3
  │
  ▼
NOTIFY USER OF INSTRUCTION TO CHANGE                      S4
SENSOR UNIT TO SECOND ATTITUDE
  │
  ▼
ACQUIRE SECOND MEASUREMENT VALUES                         S5
  │
  ▼
ACQUIRE SECOND ATTITUDE ANGLE                             S6
  │
  ▼
CALCULATE CORRECTION VALUES                               S7
  │
  ▼
DISPLAY INSTRUCTION TO CHANGE                             S8
SENSOR UNIT TO THIRD ATTITUDE
  │
  ▼
ACQUIRE THIRD MEASUREMENT VALUES                          S9
  │
  ▼
CORRECT THIRD MEASUREMENT VALUES                          S10
  │
  ▼
DETERMINE WHETHER OR NOT CORRECTION                       S11
HAS BEEN PERFORMED CORRECTLY
  │
  ▼
END
```

EP 4 679 035 A1

**Description**

Technical Field

The present invention relates to an angular velocity sensor correction method, an angular velocity sensor correction program, and an angular velocity sensor system.

Background Art

Conventionally, a ring laser gyro is known. Such a device is disclosed in Japanese Patent Laid-Open No. 4-142089, for example.

Japanese Patent Laid-Open No. 4-142089 discloses a ring laser gyro that measures angular velocity. When an angular velocity sensor that measures an angular velocity is used to measure an angular velocity as in the ring laser gyro disclosed in Japanese Patent Laid-Open No. 4-142089, it is necessary to remove errors inherent to the angular velocity sensor beforehand before performing an actual measurement. In order to remove errors inherent to the angular velocity sensor beforehand, the angular velocity sensor is attached to a rate table that rotationally moves the angular velocity sensor at a predetermined angular velocity in a horizontal plane such that an output from the angular velocity sensor that moves at the predetermined angular velocity in the horizontal plane is acquired, for example. Then, based on the acquired output from the angular velocity sensor and the value of the predetermined angular velocity in the rotational movement of the angular velocity sensor, an output error is corrected. In such a case, it is difficult to remove errors inherent to the angular velocity sensor in an environment without a configuration for moving the angular velocity sensor at the predetermined angular velocity and to a rotational position, such as a rate table.

Therefore, the ring laser gyro described in Japanese Patent Laid-Open No. 4-142089 includes a torque motor that rotates a rotation block to which the ring laser gyro, which is an angular velocity sensor, is fixed, and a gimbal rotation torque motor that rotates a gimbal that supports the rotation block such that the rotation block is rotatable, in order to remove the errors without using the configuration for moving the angular velocity sensor at the predetermined angular velocity and to the rotational position, such as a rate table. In the ring laser gyro described in Japanese Patent Laid-Open No. 4-142089, the operation of the torque motor and the gimbal rotation torque motor is controlled to rotate the rotation block and the gimbal while controlling the angular velocity. The ring laser gyro described in Japanese Patent Laid-Open No. 4-142089 calculates a correction value for removing errors inherent to the angular velocity sensor based on an angular velocity in each of a plurality of rotation states and an output of the ring laser gyro, which is an angular velocity sensor.

Prior Art

Patent Document

Patent Document 1: Japanese Patent Laid-Open No. 4-142089

Summary of the Invention

Problems to be Solved by the Invention

However, when a torque motor is provided to rotationally move the angular velocity sensor at the predetermined angular velocity or to the rotational position in order to correct errors inherent to the angular velocity sensor without using the configuration for moving the angular velocity sensor at the predetermined angular velocity or to the rotational position, such as a rate table, as in the ring laser gyro described in Japanese Patent Laid-Open No. 4-142089, the device configuration becomes complex and large due to provision of the torque motor itself and a configuration for controlling the rotation angle of the torque motor. Therefore, it is desired to correct errors inherent to the angular velocity sensor without using the configuration for moving the angular velocity sensor at the predetermined angular velocity or to the rotational position, while reducing or preventing the complexity of the device configuration and an increase in device size.

The present invention has been proposed in order to solve the aforementioned problems, and one object of the present invention is to provide an angular velocity sensor correction method, an angular velocity sensor correction program, and an angular velocity sensor system each capable of correcting errors inherent to an angular velocity sensor without using a configuration for moving the angular velocity sensor at a predetermined angular velocity or to a rotational position, while reducing or preventing the complexity of the device configuration and an increase in device size.

Means for Solving the Problems

In order to attain the aforementioned object, an angular velocity sensor correction method according to a first aspect of the present invention includes acquiring a plurality of types of measurement values of angular velocities about each of three axes from outputs of an angular velocity sensor configured to measure the angular velocities about the three axes while being changed to a plurality of attitudes, and calculating correction values for correcting the outputs of the angular velocities about the three axes of the angular velocity sensor based on a latitude in each of the plurality of attitudes calculated using the measurement values of the angular velocities acquired in each of the plurality of attitudes and an attitude angle indicating an inclination of the angular velocity sensor in each of the plurality of attitudes, and an actual latitude value indicating an actual latitude at which the angular velocity sensor is located.

As described above, the angular velocity sensor correction method according to the first aspect of the present invention includes calculating the correction values for correcting the outputs of the angular velocities about the three axes of the angular velocity sensor based on the latitude in each of the plurality of attitudes calculated using the measurement values of the angular velocities acquired in each of the plurality of attitudes, and the attitude angle indicating the inclination of the angular velocity sensor in each of the plurality of attitudes, and the actual latitude value indicating the actual latitude at which the angular velocity sensor is located. Accordingly, the outputs of the angular velocity sensor can be corrected based on the latitude value calculated using the outputs and the attitude angle of the angular velocity sensor, and the actual latitude value, without setting the angular velocity sensor at a predetermined angular velocity or a predetermined rotational position in a horizontal plane. Therefore, it is possible to calculate the correction values for correcting errors inherent to the angular velocity sensor without providing a configuration for rotating the angular velocity sensor in the horizontal plane and a configuration for controlling the rotational position and angular velocity of the angular velocity sensor. Consequently, it is possible to correct errors inherent to the angular velocity sensor without using a configuration for moving the angular velocity sensor at the predetermined angular velocity or to the rotational position, while reducing or preventing the complexity of the device configuration and an increase in device size.

In the angular velocity sensor correction method according to the first aspect, the acquiring of the plurality of types of measurement values of the angular velocities preferably includes acquiring first measurement values including the measurement values of the angular velocities about the three axes from the outputs of the angular velocity sensor in a first attitude, and acquiring second measurement values including the measurement values of the angular velocities about the three axes from the outputs of the angular velocity sensor changed to a second attitude different from the first attitude, and the calculating of the correction values preferably includes calculating the correction values based on a latitude calculated using the first measurement values and a first attitude angle, which is the attitude angle in the first attitude, a latitude calculated using the second measurement values and a second attitude angle, which is the attitude angle in the second attitude, and the actual latitude value. Accordingly, the outputs of the angular velocity sensor can be corrected based on the latitude values calculated using the measurement values and the attitude angles in the two attitudes, the first attitude and the second attitude, and the actual latitude value. Therefore, the correction values for correcting errors inherent to the angular velocity sensor can be easily calculated by changing the angular velocity sensor to the two attitudes. Consequently, it is possible to easily correct the errors inherent to the angular velocity sensor while reducing or preventing the complexity of the device configuration and an increase in device size.

The angular velocity sensor correction method according to the first aspect preferably further includes acquiring the attitude angle in each of the plurality of attitudes based on measurement values of accelerations about the three axes from outputs of an acceleration sensor configured to measure the accelerations about the three axes, and the calculating of the correction values preferably includes calculating the correction values based on a latitude in each of the plurality of attitudes calculated using the attitude angle acquired based on the outputs of the acceleration sensor in each of the plurality of attitudes, and the actual latitude value. Accordingly, the values of the attitude angles in the plurality of attitudes used to calculate the correction values can be easily acquired based on the outputs of the acceleration sensor. Therefore, the correction values for correcting the outputs of the angular velocity sensor can be easily calculated.

The angular velocity sensor correction method according to the first aspect preferably further includes acquiring measurement values for determination from the outputs of the angular velocity sensor in an attitude for determination different from the plurality of attitudes in which the measurement values of the angular velocities are acquired to calculate the correction values, correcting acquired measurement values for determination based on the correction values, and comparing a latitude calculated using corrected measurement values for determination and an attitude angle for determination, which is the attitude angle indicating the inclination of the angular velocity sensor in the attitude for determination, with the actual latitude value to determine whether or not correction using the correction values has been performed correctly. Accordingly, the latitude calculated using the corrected measurement values for determination and the attitude angle for determination is compared with the actual latitude value such that it is determined whether or not correction of errors inherent to the angular velocity sensor using the correction values has been performed correctly, and thus when it is determined that the correction has not been performed correctly, for example, a user can be prompted to recalculate the correction values. Therefore, the possibility that the angular velocity sensor performs a measurement while the outputs are not correctly corrected can be reduced or prevented by determining whether or not the correction using the correction values has been performed correctly.

In the angular velocity sensor correction method according to the first aspect, the acquiring of the plurality of types of measurement values of the angular velocities preferably includes acquiring the plurality of types of measurement values of the angular velocities from the outputs of the angular velocity sensor changed to the plurality of attitudes such that the measurement values of the angular velocities in the plurality of attitudes are different from each other. Accordingly, the attitude of the angular velocity sensor is changed to each of the plurality of attitudes such that the measurement values of the angular velocities about the three axes in each of the plurality of attitudes are different from each other, and thus a correction value calculation based on the measurement values of the angular velocities can be performed more accurately. Therefore, it is possible to more accurately correct errors inherent to the angular velocity sensor without using the configuration for moving the angular velocity sensor at the predetermined angular velocity or to the rotational position, while reducing or preventing the complexity of the device configuration and an increase in device size.

The angular velocity sensor correction method according to the first aspect preferably further includes receiving an operation to start a calibration operation on an operation unit configured to receive an input operation, and the calculating of the correction values preferably includes calculating the correction values based on the latitude in each of the plurality of attitudes calculated using the measurement values of the angular velocities and the attitude angle in each of the plurality of attitudes acquired in the calibration operation, and the actual latitude value. Accordingly, before the angular velocities are measured using the angular velocity sensor, the calibration operation is performed based on an input operation by the user, and thus the correction values for correcting the outputs of the angular velocity sensor can be calculated. Therefore, the user can correct errors inherent to the angular velocity sensor by the calibration operation each time the angular velocity sensor performs a measurement. Consequently, even when the magnitude of the errors inherent to the angular velocity sensor changes due to repeated use of the angular velocity sensor, the measurement values of the angular velocities corrected based on the correction values calculated by the calibration operation each time the measurement is performed can be acquired, and thus the measurement values of the angular velocities can be acquired more accurately.

In such a case, the angular velocity sensor correction method preferably further includes notifying a user of an instruction to change the angular velocity sensor to an attitude different from one attitude among the plurality of attitudes, after the measurement values of the angular velocities are acquired from the outputs of the angular velocity sensor in the one attitude in the calibration operation. Accordingly, the user can recognize the timing of changing the attitude of the angular velocity sensor by recognizing the notification instruction to change the angular velocity sensor from one attitude to a different attitude. Therefore, the user can recognize that the measurement of the angular velocities in the one attitude has been completed, and thus it is possible to reduce or prevent the possibility that the angular velocity sensor is moved before the measurement of the angular velocities in the one attitude is completed. Consequently, inaccurate measurement of the angular velocities in the one attitude can be reduced or prevented, and thus inaccurate correction of the outputs of the angular velocity sensor can be reduced or prevented.

In the angular velocity sensor correction method according to the first aspect, the calculating of the correction values preferably includes calculating the correction values such that a latitude represented by $\lambda$ calculated by a following formula (1), where the measurement values of the angular velocities about the three axes in each of the plurality of attitudes are $\Omega_x$, $\Omega_y$, and $\Omega_z$, a pitch angle and a roll angle of the inclination of the angular velocity sensor in the attitude angle in each of the plurality of attitudes are $\theta$ and $\varphi$, respectively, and the correction values for correcting the outputs of the angular velocities about the three axes are $k_x$, $k_y$, and $k_z$, respectively, is equal to the actual latitude value.

[Mathematical Formula 2]

$$\lambda = \sin^{-1}\left(\frac{(\Omega_x + k_x)\sin\theta - (\Omega_y + k_y)\sin\varphi\cos\theta - (\Omega_z + k_z)\cos\varphi\cos\theta}{\sqrt{(\Omega_x + k_x)^2 + (\Omega_y + k_y)^2 + (\Omega_z + k_z)^2}}\right) \dots \quad (1)$$

Accordingly, the correction values are calculated such that the latitude calculated by the calculation formula (1) using the angular velocities and the attitude angle becomes equal to the actual latitude value, and thus the correction values for the angular velocities ($\Omega_x$, $\Omega_y$, and $\Omega_z$) about the three axes can be easily calculated by using the calculation formula (1). The phrase "such that a latitude represented by $\lambda$ calculated by a following formula (1) is equal to the actual latitude value" is given in a broad sense, including a case in which approximate correction values are calculated such that the calculated $\lambda$ becomes substantially equal to the actual latitude value. Furthermore, the "pitch angle" refers to an angle of inclination around one of two mutually perpendicular directions as a rotation axis in the attitude angle of the angular velocity sensor, and the "roll angle" refers to an angle of inclination around the other of the two mutually perpendicular directions as a rotation axis in the attitude angle of the angular velocity sensor.

In such a case, the calculating of the correction values preferably includes calculating correction values for correcting outputs of a vibratory angular velocity sensor including a vibrator such that the latitude calculated using the measurement values of the angular velocities acquired in each of the plurality of attitudes and the attitude angle in each of the plurality of attitudes is equal to the actual latitude value. A vibratory angular velocity sensor including a vibrator includes mechanical and electronic components, and thus errors inherent to the angular velocity sensor become larger as compared with an optical angular velocity sensor. Considering this, in the present invention, the correction values for correcting the outputs of the vibratory angular velocity sensor including the vibrator are calculated such that the latitude calculated using the measurement values of the angular velocities acquired in each of the plurality of attitudes and the attitude angle in each of the plurality of attitudes becomes equal to the actual latitude value. Thus, when the vibratory angular velocity sensor including the vibrator is used, errors inherent to the angular velocity sensor can be effectively corrected.

An angular velocity sensor correction program according to a second aspect of the present invention is configured to cause a computer to execute operations including acquiring a plurality of types of measurement values of angular velocities about each of three axes from outputs of an angular velocity sensor configured to measure the angular velocities about the three axes while being changed to a plurality of attitudes, and calculating correction values for correcting the outputs of the angular velocities about the three axes of the angular velocity sensor based on a latitude in each of the plurality of attitudes calculated using the measurement values of the angular velocities acquired in each of the plurality of attitudes and an attitude angle indicating an inclination of the angular velocity sensor in each of the plurality of attitudes, and an actual latitude value indicating an actual latitude at which the angular velocity sensor is located.

In the angular velocity sensor correction program according to the second aspect of the present invention, as described above, the correction values for correcting the outputs of the angular velocities about the three axes of the angular velocity sensor are calculated based on the latitude in each of the plurality of attitudes calculated using the measurement values of the angular velocities acquired in each of the plurality of attitudes, and the attitude angle indicating the inclination of the angular velocity sensor in each of the plurality of attitudes, and the actual latitude value indicating the actual latitude at which the angular velocity sensor is located. Accordingly, the outputs of the angular velocity sensor can be corrected based on the latitude value calculated using the outputs and the attitude angle of the angular velocity sensor, and the actual latitude value, without setting the angular velocity sensor at a predetermined angular velocity or a predetermined rotational position in a horizontal plane. Therefore, it is possible to calculate the correction values for correcting errors inherent to the angular velocity sensor without providing a configuration for rotating the angular velocity sensor in the horizontal plane and a configuration for controlling the rotational position and angular velocity of the angular velocity sensor. Consequently, it is possible to provide the angular velocity sensor correction program capable of correcting errors inherent to the angular velocity sensor without using a configuration for moving the angular velocity sensor at the predetermined angular velocity or to the rotational position, while reducing or preventing the complexity of the device configuration and an increase in device size.

An angular velocity sensor system according to a third aspect of the present invention includes an angular velocity sensor to measure angular velocities about three axes, and a controller configured or programmed to correct outputs of the angular velocities about the three axes of the angular velocity sensor, and the controller is configured or programmed to acquire a plurality of types of measurement values of the angular velocities about each of the three axes measured by the angular velocity sensor in a plurality of attitudes from the outputs of the angular velocity sensor, and calculate correction values for correcting the outputs of the angular velocities about the three axes of the angular velocity sensor based on a latitude in each of the plurality of attitudes calculated using the measurement values of the angular velocities acquired in each of the plurality of attitudes and an attitude angle indicating an inclination of the angular velocity sensor in each of the plurality of attitudes, and an actual latitude value indicating an actual latitude at which the angular velocity sensor is located.

In the angular velocity sensor system according to the third aspect of the present invention, as described above, the correction values for correcting the outputs of the angular velocities about the three axes of the angular velocity sensor are calculated based on the latitude in each of the plurality of attitudes calculated using the measurement values of the angular velocities acquired in each of the plurality of attitudes, and the attitude angle indicating the inclination of the angular velocity sensor in each of the plurality of attitudes, and the actual latitude value indicating the actual latitude at which the angular velocity sensor is located. Accordingly, the outputs of the angular velocity sensor can be corrected based on the latitude value calculated using the outputs and the attitude angle of the angular velocity sensor, and the actual latitude value, without setting the angular velocity sensor at a predetermined angular velocity or a predetermined rotational position in a horizontal plane. Therefore, it is possible to calculate the correction values for correcting errors inherent to the angular velocity sensor without providing a configuration for rotating the angular velocity sensor in the horizontal plane and a configuration for controlling the rotational position and angular velocity of the angular velocity sensor. Consequently, it is possible to provide the angular velocity sensor system capable of correcting errors inherent to the angular velocity sensor without using a configuration for moving the angular velocity sensor at the predetermined angular velocity or to the rotational position, while reducing or preventing the complexity of the device configuration and an increase in device size.

The angular velocity sensor system according to the third aspect preferably further includes an acceleration sensor configured to measure accelerations about the three axes in order to acquire the attitude angle in each of the plurality of attitudes, and the controller is preferably configured or programmed to calculate the correction values based on a latitude in each of the plurality of attitudes calculated using the attitude angle acquired based on measurement values of the accelerations about the three axes from outputs of the acceleration sensor in each of the plurality of attitudes, and the actual latitude value. Accordingly, the values of the attitude angles in the plurality of attitudes used to calculate the correction values can be easily acquired based on the outputs of the acceleration sensor. Therefore, it is possible to provide the angular velocity sensor system capable of easily calculating the correction values for correcting the outputs of the angular velocity sensor. Advantageous Effect of the Invention

According to the present invention, as described above, it is possible to correct errors inherent to the angular velocity sensor without using the configuration for moving the angular velocity sensor at the predetermined angular velocity or to the rotational position, while reducing or preventing the complexity of the device configuration and an increase in device size.

Brief Description of the Drawings

[FIG. 1] A block diagram showing an angular velocity sensor system according to an embodiment.
[FIG. 2] A diagram schematically showing an arrangement of angular velocity sensors and acceleration sensors in a sensor unit.
[FIG. 3] A diagram showing an example of a display on a display unit when measurement of an attitude angle/azimuth angle or execution of a calibration operation is selected.
[FIG. 4] A diagram showing an example of a display prompting a user to change the sensor unit to a second attitude.
[FIG. 5] A diagram showing an example of a display prompting the user to change the sensor unit to a third attitude.
[FIG. 6] A diagram showing an example of a display of a result of a correction value determination.
[FIG. 7] A flowchart for illustrating an angular velocity sensor correction method according to the present embodiment.

Modes for Carrying Out the Invention

An embodiment of the present invention is hereinafter described on the basis of the drawings.

Configuration of Angular Velocity Sensor System

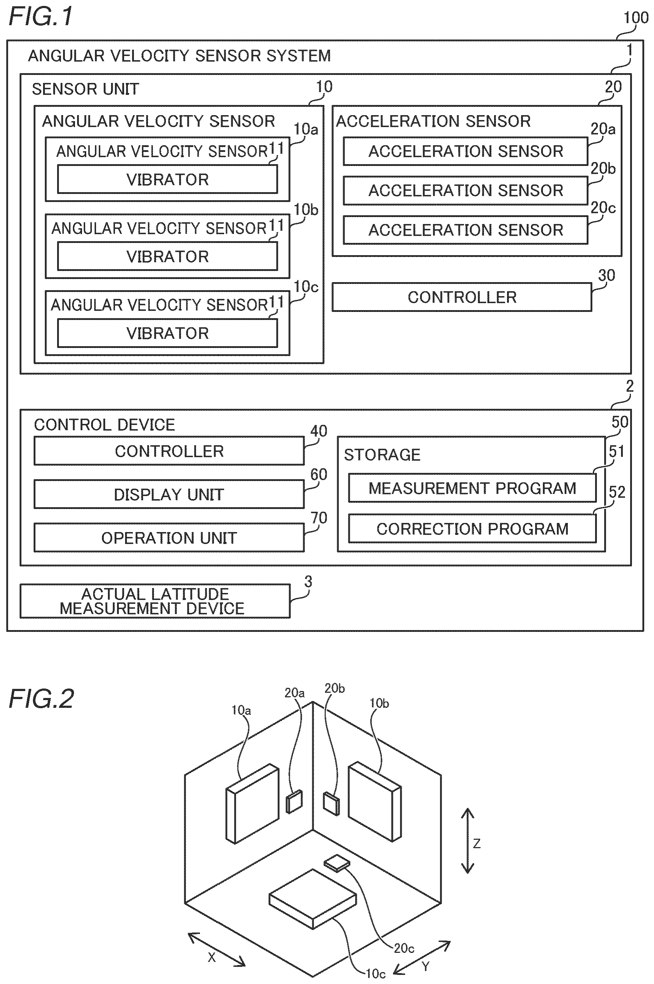

The configuration of an angular velocity sensor system 100 according to the embodiment of the present invention is now described with reference to FIGS. 1 to 6.

As shown in FIG. 1, the angular velocity sensor system 100 includes a sensor unit 1, a control device 2, and an actual latitude measurement device 3. The sensor unit 1 includes an angular velocity sensor 10, an acceleration sensor 20, and a controller 30. The angular velocity sensor 10 and the acceleration sensor 20 of the sensor unit 1 are micro electro mechanical system (MEMS) devices, for example. The angular velocity sensor system 100 measures an attitude angle and an azimuth angle based on outputs from the sensor unit 1 mounted on an aircraft, a marine vessel, or a smartphone, for example. In this description, the "attitude angle" refers to the inclination (pitch angle and roll angle) of the sensor unit 1 (angular velocity sensor 10 and the acceleration sensor 20). The attitude angle (pitch angle and roll angle) refers to the inclination of the sensor unit 1 with respect to a vertical direction perpendicular to a horizontal plane. The pitch angle is an angle of inclination around one (right-left direction, for example) of two mutually perpendicular directions as a rotation axis in the attitude angle of the sensor unit 1 (angular velocity sensor 10 and acceleration sensor 20), and indicates, for example, an angle of inclination from the vertical direction to a north-south direction (an angle of inclination around a Y direction in FIG. 2 as a rotation axis) as viewed in a true north direction, which is the direction of a northern end of the axis of rotation of the earth (90 degrees north latitude). The roll angle is an angle of inclination around the other (forward-rearward direction, for example) of the two mutually perpendicular directions as a rotation axis, and indicates, for example, an angle of inclination from the vertical direction to an east-west direction (an angle of inclination around an X direction in FIG. 2 as a rotation axis) as viewed in the true north direction. In addition, the "azimuth angle" indicates an angle (yaw angle) around the vertical direction with the vertical direction perpendicular to the horizontal plane as a rotation axis.

Configuration of Sensor Unit

The sensor unit 1 includes a three-axis angular velocity sensor 10 and a three-axis acceleration sensor 20. The angular velocity sensor 10 measures (detects) three mutually perpendicular axes of angular velocity. Specifically, the angular velocity sensor 10 includes an angular velocity sensor 10a, an angular velocity sensor 10b, and an angular velocity sensor 10c that measure angular velocities about three axes, respectively. The acceleration sensor 20 measures (detects) accelerations about the three axes. The acceleration sensor 20 includes an acceleration sensor 20a, an acceleration sensor 20b, and an acceleration sensor 20c that measure accelerations about the three axes, respectively. The angular velocity sensor 10a, the angular velocity sensor 10b, and the angular velocity sensor 10c have the same configuration. The acceleration sensor 20a, the acceleration sensor 20b, and the acceleration sensor 20c have the same configuration.

Each of the angular velocity sensors 10a, 10b, and 10c for the three axes includes a vibrator 11. That is, the angular velocity sensor 10 (angular velocity sensors 10a to 10c) is a vibratory gyroscope including the vibrator 11. In each of the angular velocity sensors 10a, 10b, and 10c, the vibrator 11 vibrates in a predetermined direction. The vibration of the vibrator 11 changes due to a Coriolis force generated by applying a rotational motion to the vibrator 11 vibrating in the predetermined direction. Each of the angular velocity sensors 10 (angular velocity sensors 10a to 10c) for the three axes is configured to measure an angular velocity based on the change in the vibration of the vibrator 11. The vibrator 11 has a ring shape, for example.

As shown in FIG. 2, the angular velocity sensor 10 (angular velocity sensors 10a to 10c) measures angular velocities about the three axes around an X-axis, a Y-axis, and a Z-axis, which are perpendicular to each other. That is, the angular velocity sensors 10a to 10c measure angular velocities around axes that intersect with each other. Specifically, the angular velocity sensor 10a is configured to detect an angular velocity around the X-axis. The angular velocity sensor 10b is configured to detect an angular velocity around the Y-axis. The angular velocity sensor 10c is configured to detect an angular velocity around the Z-axis.

The acceleration sensor 20 (acceleration sensors 20a to 20c) measures accelerations about the three axes in an X-axis direction, a Y-axis direction, and a Z-axis direction perpendicular to each other. That is, the acceleration sensors 20a to 20c measure accelerations along axial directions that intersect with each other. Specifically, the acceleration sensor 20a is configured to detect an acceleration in the X-axis direction. The acceleration sensor 20b is configured to detect an acceleration in the Y-axis direction. The acceleration sensor 20c is configured to detect an acceleration in the Z-axis direction.

The controller 30 controls the operation of each portion of the sensor unit 1. The controller 30 includes an arithmetic unit (processor) such as a central processing unit (CPU). For example, the controller 30 controls an output of AC power supplied to the vibrator 11 of the angular velocity sensor 10 in order to excite the vibrator 11 to vibrate. The controller 30 acquires an output from each of the angular velocity sensors 10 (angular velocity sensors 10a to 10c) for the three axes. The controller 30 also acquires an output from each of the acceleration sensors 20 (acceleration sensors 20a to 20c) for the three axes. The controller 30 outputs angular velocities about the three axes measured by the angular velocity sensor 10 and accelerations about the three axes measured by the acceleration sensor 20 as signals indicating the measurement results of the sensor unit 1 to a controller 40 of the control device 2 described below.

The angular velocity sensor 10 and the acceleration sensor 20 of the sensor unit 1 are integrally configured with each other. For example, the three-axis angular velocity sensor 10 (angular velocity sensors 10a to 10c) and the three-axis acceleration sensor 20 (acceleration sensors 20a to 20c) are arranged on a sensor mount (not shown), which is a common member. Similarly, the controller 30 is arranged on the common member with the angular velocity sensor 10 and the acceleration sensor 20. Therefore, when the orientation of the sensor unit 1 is changed, the attitudes of the angular velocity sensor 10 and the acceleration sensor 20 are also changed integrally.

Configuration of Control Device

As shown in FIG. 1, the control device 2 includes the controller 40, a storage 50, a display unit 60, and an operation unit 70. The control device 2 is a computer used by a user to measure the attitude angle and azimuth angle. For example, the control device 2 is a personal computer (PC).

The controller 40 includes an arithmetic unit (processor) such as a CPU, a read-only memory (ROM), a random access memory (RAM), etc. The controller 40 controls the operation of each portion of the control device 2. The controller 40 performs a control to calculate the attitude angle and azimuth angle, and a control to correct the outputs of angular velocities about the three axes of the angular velocity sensor 10. A control process by the controller 40 is described below in detail.

The storage 50 includes a hard disk drive or a semiconductor storage device, for example. The storage 50 is a non-volatile storage medium that stores a plurality of programs including a measurement program 51 and a correction program 52 executed by the controller 40, and various parameters. The storage 50 may include a computer-readable recording medium such as an optical disk, a magnetic disk, or a non-volatile semiconductor memory. The correction program 52 is an example of a "correction program for the angular velocity sensor" in the claims.

The display unit 60 includes a display monitor such as a liquid crystal display. The display unit 60 provides a display under the control of the controller 40. The display unit 60 displays the results of calculation of the attitude angle and azimuth angle by the controller 40, which is described below. The display unit 60 also displays instructions to the user in a calibration operation described below.

The operation unit 70 receives an input operation by the user. The operation unit 70 includes, for example, a pointing device such as a mouse, and a keyboard. The operation unit 70 outputs an operation signal based on the received input operation to the controller 40. For example, the operation unit 70 receives an operation to start the calibration operation described below.

The sensor unit 1 and the control device 2 are configured to communicate with each other. The control device 2 acquires signals indicating measurement values that are the measurement results of the sensor unit 1. That is, the controller 40 of the control device 2 acquires, from the controller 30 of the sensor unit 1, signals indicating outputs from the angular velocity sensor 10 and outputs from the acceleration sensor 20.

Actual Latitude Measurement Device

The actual latitude measurement device 3 includes a GNSS receiver in the Global Navigation Satellite System (GNSS). The GNSS is a system that uses signals from navigation satellites to perform position measurement, navigation, and time distribution. The actual latitude measurement device 3 receives signals from navigation satellites and acquires information on the current position, including latitude, based on the received signals. The actual latitude measurement device 3 includes a global positioning system (GPS) receiver, for example. The actual latitude measurement device 3 is arranged integrally with the sensor unit 1 (angular velocity sensor 10 and acceleration sensor 20). The actual latitude measurement device 3 outputs information indicating the acquired latitude to the control device 2. That is, the controller 40 of the control device 2 acquires an actual latitude value indicating the actual latitude at which the angular velocity sensor 10 is located, based on the output from the actual latitude measurement device 3.

Calculation of Attitude Angle and Azimuth Angle

The controller 40 acquires $\Omega_x$, $\Omega_y$, and $\Omega_z$ as the measurement values of the angular velocities about the three axes acquired from the outputs of the angular velocity sensor 10, based on the signals indicating the measurement results from the controller 30 of the sensor unit 1. Note that $\Omega_x$ indicates the angular velocity around the X-axis acquired from the output of the angular velocity sensor 10a, $\Omega_y$ indicates the angular velocity around the Y-axis acquired from the output of the angular velocity sensor 10b, and $\Omega_z$ indicates the angular velocity around the Z-axis acquired from the output of the angular velocity sensor 10c. The controller 40 acquires $g_x$, $g_y$, and $g_z$ as the measurement values of the accelerations about the three axes acquired from the outputs of the acceleration sensor 20 based on the signals indicating the measurement results from the controller 30 of the sensor unit 1. Note that $g_x$ indicates the acceleration in the X-axis direction acquired from the output of the acceleration sensor 20a, $g_y$ indicates the acceleration in the Y-axis direction acquired from the output of the acceleration sensor 20b, and $g_z$ indicates the acceleration in the Z-axis direction acquired from the output of the acceleration sensor 20c.

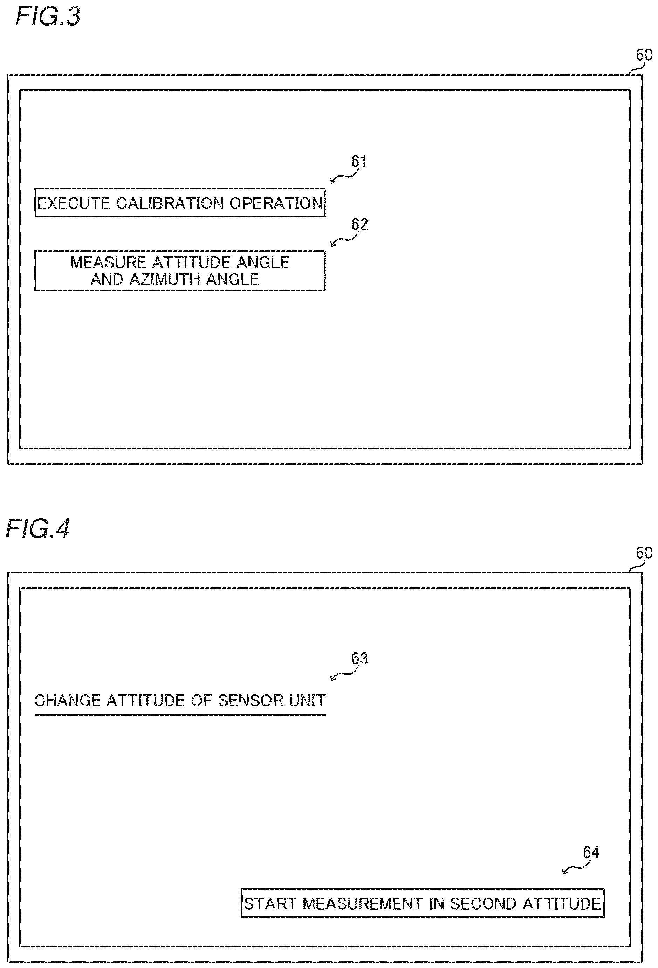

As shown in FIG. 3, the controller 40 of the control device 2 calculates an attitude angle (pitch angle and roll angle) indicating the inclination of the sensor unit 1 and an azimuth angle (yaw angle) in a direction in which the sensor unit 1 is arranged, based on the outputs from the angular velocity sensor 10 and the acceleration sensor 20 of the sensor unit 1. For example, when a click operation on a button 62 displayed on the display unit 60 is received by the operation unit 70, the controller 40 of the control device 2 executes the measurement program 51 stored in the storage 50 to execute a control process to acquire the attitude angle and the azimuth angle.

The controller 40 calculates $\theta$ and $\varphi$, which indicate the inclination (angle) of the attitude angle of the sensor unit 1 (angular velocity sensor 10 and acceleration sensor 20), by an arithmetic process using the following formulas (2) and (3) when the accelerations about the three axes measured by the acceleration sensor 20 is $g_x$, $g_y$, and $g_z$.

[Mathematical Formula 3]

$$\theta = \sin^{-1}\frac{g_x}{\sqrt{g_x{}^2+g_y{}^2+g_z{}^2}} \quad \dots \quad (2)$$

$$\varphi = \tan^{-1}\left(\frac{-g_y}{-g_z}\right) \quad \dots \quad (3)$$

Note that $\theta$ indicates the value of the pitch angle (inclination angle in the north-south direction) of the inclination of the sensor unit 1 in the attitude angle, and $\varphi$ indicates the value of the roll angle (inclination angle in the east-west direction) of the inclination of the sensor unit 1 in the attitude angle. That is, the acceleration sensor 20 measures accelerations about the three axes in order to acquire the attitude angle of the sensor unit 1 (angular velocity sensor 10 and acceleration sensor 20).

The controller 40 of the control device 2 calculates $\psi$, which indicates the azimuth angle, by an arithmetic process using the following formula (4) based on $\theta$ and $\varphi$ calculated using the formulas (2) and (3) when the measurement values of the angular velocities about the three axes measured by the angular velocity sensor 10 are $\Omega_x$, $\Omega_y$, and $\Omega_z$.
[Mathematical Formula 4]

$$\psi = \tan^{-1}\left(\frac{-\Omega_y \cos\varphi + \Omega_z \sin\varphi}{\Omega_x \cos\theta + \Omega_y \sin\varphi \sin\theta + \Omega_z \cos\varphi \sin\theta}\right) \ldots \quad (4)$$

Then, the controller 40 displays, on the display unit 60, values indicating the attitude angles ($\theta$ and $\varphi$) and the azimuth angle ($\psi$) calculated by the arithmetic processes using the formulas (2), (3), and (4).

Correction of Angular Velocity Sensor

The measurement values ($\Omega_x$, $\Omega_y$, and $\Omega_z$) of the angular velocities measured by the angular velocity sensor 10 may contain errors (biases) inherent to the angular velocity sensor 10. The errors (biases) inherent to the angular velocity sensor 10 vary in magnitude for each individual angular velocity sensor 10, and change in magnitude over time each time the angular velocity sensor 10 is used. In response to this, the angular velocity sensor system 100 is configured to perform the calibration operation to correct the errors (biases) inherent to the angular velocity sensor 10 before measuring the attitude angle and the azimuth angle. In this embodiment, the controller 40 of the control device 2 is configured to correct the output of the angular velocity about each of the three axes of the angular velocity sensor 10 by executing the correction program 52 stored in the storage 50. In the calibration operation, the controller 40 of the control device 2 calculates a correction value for correcting the errors of the angular velocity sensor 10.

As shown in FIG. 3, when a click operation on a button 61 displayed on the display unit 60 is received by the operation unit 70, the controller 40 executes the correction program 52 stored in the storage 50 to start the calibration operation.

In this embodiment, during the calibration operation, the controller 40 acquires a plurality of types of measurement values of the angular velocities about each of the three axes from the outputs of the angular velocity sensor 10 that measures the angular velocities about the three axes while being changed to a plurality of attitudes. The controller 40 then calculates a correction value for correcting the output of the angular velocity about each of the three axes of the angular velocity sensor 10, based on the latitude in each of the plurality of attitudes calculated using the measurement values of the angular velocities acquired in each of the plurality of attitudes, and the attitude angle indicating the inclination of the sensor unit 1 (angular velocity sensor 10 and acceleration sensor 20) in each of the plurality of attitudes, and the actual latitude value indicating the actual latitude at which the sensor unit 1 (angular velocity sensor 10 and acceleration sensor 20) is located.

In the calibration operation, the controller 40 acquires a measurement value based on the output from the sensor unit 1 (angular velocity sensor 10 and acceleration sensor 20) placed in a first attitude and a measurement value based on the output from the sensor unit 1 placed in a second attitude that is different from the first attitude. The first attitude is, for example, the attitude of the sensor unit 1 at the time at which the calibration operation is started. The second attitude is, for example, an attitude changed from the first attitude so as to move the sensor unit 1 in all rotation directions around the X-axis, the Y-axis, and the Z-axis. Then, the controller 40 calculates correction values for correcting the outputs of the angular velocity sensor 10, based on the latitude calculated using the measurement values of the angular velocities and the attitude angle in the first attitude, the latitude calculated using the measurement values of the angular velocities and the attitude angle in the second attitude, and the actual latitude acquired from the actual latitude measurement device 3. Specifically, the controller 40 calculates a correction value such that the latitude calculated using the measurement values of the angular velocities and the attitude angle in the first attitude and the latitude calculated using the measurement values of the angular velocities and the attitude angle in the second attitude are each equal to the actual latitude acquired from the actual latitude measurement device 3.

More specifically, in the calibration operation, the controller 40 acquires, as first measurement values, the measurement values ($\Omega_x$, $\Omega_y$, and $\Omega_z$) of the angular velocities about the three axes measured by the angular velocity sensors 10a to 10c in the first attitude. In addition, the controller 40 calculates the value ($\theta$ and $\varphi$) of the attitude angle of the sensor unit 1 (angular velocity sensor 10 and acceleration sensor 20) in the first attitude by performing an arithmetic process similar to the above formulas (2) and (3) based on the measurement values ($g_x$, $g_y$, and $g_z$) of the accelerations about the three axes measured by the acceleration sensors 20a to 20c from the outputs of the acceleration sensors 20a to 20c in the first attitude. The controller 40 acquires the calculated value ($\theta$ and $\varphi$) of the attitude angle in the first attitude as a first attitude angle.

Similarly to the first attitude, in the second attitude, the controller 40 acquires, as second measurement values, the measurement values ($\Omega_x$, $\Omega_y$, and $\Omega_z$) of the angular velocities about the three axes measured by the angular velocity sensor 10 of the sensor unit 1 changed to the second attitude different from the first attitude. In addition, the controller 40 calculates the value ($\theta$ and $\varphi$) of the attitude angle of the sensor unit 1 (angular velocity sensor 10 and acceleration sensor 20) in the second attitude by performing an arithmetic process similar to the above formulas (2) and (3) based on the measurement values ($g_x$, $g_y$, and $g_z$) of the accelerations about the three axes measured by the acceleration sensors 20a to 20c from the outputs of the acceleration sensors 20a to 20c in the second attitude. The controller 40 acquires the calculated value ($\theta$ and $\varphi$) of the attitude angle in the second attitude as a second attitude angle.

As shown in FIG. 4, after acquiring the measurement values of the angular velocities from the outputs of the angular velocity sensor 10 in one of the plurality of attitudes in the calibration operation, the controller 40 notifies (informs) the user of an instruction to change the sensor unit 1 (angular velocity sensor 10 and acceleration sensor 20) to an attitude different from the one attitude. Specifically, the controller 40 displays, on the display unit 60, textual information 63 indicating an instruction to change from the first attitude to the second attitude at the timing between acquiring the first measurement values, which are the measurement values of the angular velocities in the first attitude and acquiring the second measurement values, which are the measurement values of the angular velocities in the second attitude. When an operation to start measurement in the second attitude is received from the user who has changed the sensor unit 1 from the first attitude to the second attitude, the controller 40 starts measurement of the second measurement values, which are the measurement values in the second attitude. For example, when a click operation on a button 64 displayed on the display unit 60 is received by the operation unit 70, the controller 40 starts measurement in the second attitude.

In this embodiment, a plurality of types of measurement values of the angular velocities are acquired from the outputs of the angular velocity sensor 10 changed to the plurality of attitudes such that the measurement values of the angular velocities in the plurality of attitudes are different from each other. Specifically, the sensor unit 1 (angular velocity sensor 10 and acceleration sensor 20) is changed from the first attitude to the second attitude such that the angular velocities ($\Omega_x$, $\Omega_y$, and $\Omega_z$) about the three axes of the second measurement values, which are the measurement values of the angular velocity sensor 10 in the second attitude, are different from the angular velocities ($\Omega_x$, $\Omega_y$, and $\Omega_z$) about the three axes of the first measurement values, which are the measurement values of the angular velocity sensor 10 in the first attitude. That is, the controller 40 acquires the second measurement values in which the output values of the angular velocity sensors 10a to 10c are different from those of the first measurement values. In other words, the $\Omega_x$ value, the $\Omega_y$ value, and the $\Omega_z$ value of the angular velocities of the first measurement values are different from the $\Omega_x$ value, the $\Omega_y$ value, and the $\Omega_z$ value of the angular velocities of the second measurement values. In each of the first and second attitudes, the controller 40 acquires signals indicating the measurement results from the sensor unit 1 placed in a stationary state.

The latitude of a position at which the sensor unit 1 (angular velocity sensor 10 and acceleration sensor 20) is arranged can be calculated by an arithmetic process based on the first measurement values, which are the measurement values of the angular velocities in the first attitude, and the first attitude angle. Similarly, the latitude of a position at which the sensor unit 1 (angular velocity sensor 10 and acceleration sensor 20) is arranged can be calculated by an arithmetic process based on the second measurement values, which are the measurement values of the angular velocities in the second attitude, and the second attitude angle.

Specifically, the latitude represented by $\lambda$ is calculated by the following formula (5) where $\Omega_x$, $\Omega_y$, and $\Omega_z$ represent the angular velocities about the three axes of each of the first measurement values and the second measurement values, $\theta$ represents the pitch angle of the inclination of the angular velocity sensor 10 in each of the first attitude angle and the second attitude angle, and $\varphi$ represents the roll angle of the inclination of the angular velocity sensor 10 in each of the first attitude angle and the second attitude angle.

[Mathematical Formula 5]

$$\lambda = \sin^{-1}\left( \frac{\Omega_x \sin\theta - \Omega_y \sin\varphi \cos\theta - \Omega_z \cos\varphi \cos\theta}{\sqrt{\Omega_x{}^2 + \Omega_y{}^2 + \Omega_z{}^2}} \right) \dots \quad (5)$$

When the angular velocity sensor 10 does not contain errors (biases), the latitude value (A) calculated by the above formula (5) using the first measurement values and the first attitude angle or the second measurement values and the second attitude angle is equal to the actual latitude value. Therefore, the controller 40 acquires, from the actual latitude measurement device 3, the actual latitude value indicating the actual latitude at which the sensor unit 1 (angular velocity sensor 10 and acceleration sensor 20) is located. The controller 40 is configured to calculate the correction value for correcting the output of the angular velocity about each of the three axes of the angular velocity sensor 10 (angular velocity sensors 10a to 10c) using the measurement values of the angular velocities about the three axes and the attitude angles in two attitudes including the first measurement values and the first attitude angle in the first attitude and the second measurement values and the second attitude angle in the second attitude, and the actual latitude value, based on the latitude being calculated using the measurement values of the angular velocities about the three axes and the attitude angle indicating the inclination of the sensor unit 1 (angular velocity sensor 10 and acceleration sensor 20). That is, the controller 40 calculates the correction value for each of the three axes based on the latitude calculated using the first measurement values and the first attitude angle acquired in the calibration operation, the latitude calculated using the second measurement values and the second attitude angle acquired in the calibration operation, and the actual latitude value acquired from the actual latitude measurement device 3. Specifically, the controller 40 calculates the correction value such that the latitude in each of the plurality of attitudes calculated using the measurement values of the angular velocities acquired in each of the plurality of attitudes and the attitude angle in each of the plurality of attitudes is equal to the actual latitude value. That is, the controller 40 calculates the correction value such that the latitude ($\lambda$) calculated by the above formula (5) using the first measurement values and the first attitude angle and the latitude ($\lambda$) calculated by the above formula (5) using the second measurement values and the second attitude angle are each equal to the actual latitude value.

More specifically, the controller 40 calculates the correction values ($k_x$, $k_y$, and $k_z$) for correcting the outputs of the angular velocities about the three axes as $k_x$, $k_y$, and $k_z$, respectively, such that the latitude represented by $\lambda$ calculated by the following formula (1) is equal to the actual latitude value acquired from the actual latitude measurement device 3. Note that the correction value for the angular velocity $\Omega_x$ around the X-axis is $k_x$, the correction value for the angular velocity $\Omega_y$ around the Y-axis is $k_y$, and the correction value for the angular velocity $\Omega_z$ around the Z-axis is $k_z$.

[Mathematical Formula 6]

$$\lambda = \sin^{-1}\left(\frac{(\Omega_x+k_x)\sin\theta-(\Omega_y+k_y)\sin\varphi\cos\theta-(\Omega_z+k_z)\cos\varphi\cos\theta}{\sqrt{(\Omega_x+k_x)^2+(\Omega_y+k_y)^2+(\Omega_z+k_z)^2}}\right) \ldots \quad (1)$$

When the outputs of the angular velocity sensor 10 do not contain errors (biases), the value of the square root of the sum of the squares of the angular velocity $\Omega_x$ around the X-axis, the angular velocity $\Omega_y$ around the Y-axis, and the angular velocity $\Omega_z$ around the Z-axis is 15 deg/hr (degrees per hour), which is the angular velocity of rotation of the Earth. Therefore, for the three variables $k_x$, $k_y$, and $k_z$, the following three formulas are derived: a formula according to the above formula (1) using the first measurement values and the first attitude angle in the first attitude and the actual latitude value, a formula according to the above formula (1) using the second measurement values and the second attitude angle in the second attitude and the actual latitude value, and the square root of the sum of the squares of ($\Omega_x + k_x$), ($\Omega_y + k_y$), and ($\Omega_z + k_z$) being equal to the angular velocity of rotation, such that the correction values ($k_x$, $k_y$, and $k_z$) for the angular velocity sensors 10a to 10c are calculated.

The correction value may be calculated by sweeping a numerical value to converge the value and calculate an approximate value. That is, the controller 40 may calculate an approximate correction value such that the latitude calculated using the first measurement values and the first attitude angle and the latitude calculated using the second measurement values and the second attitude angle are each substantially equal to the actual latitude value.

Determination of Whether or Not Correction Has Been Performed Correctly

In this embodiment, the controller 40 is configured to determine whether or not correction using the correction values ($k_x$, $k_y$, and $k_z$) has been performed correctly. After the correction values are calculated, the controller 40 makes a correction determination by acquiring third measurement values, which are measurement values ($\Omega_x$, $\Omega_y$, and $\Omega_z$) indicating the angular velocities about the three axes based on the outputs from the angular velocity sensor 10 in a third attitude, and a third attitude angle, which is the value ($\theta$ and $\varphi$) of the attitude angle of the sensor unit 1 (angular velocity sensor 10 and acceleration sensor 20) in the third attitude. The third attitude is an attitude different from the plurality of attitudes (first attitude and second attitude) in which the measurement values (first measurement values and second measurement values) of the angular velocities for calculating the correction values ($k_x$, $k_y$, and $k_z$) are acquired. The third attitude, the third measurement values, and the third attitude angle are examples of an "attitude for determination", a "measurement value for determination", and an "attitude angle for determination" in the claims, respectively.

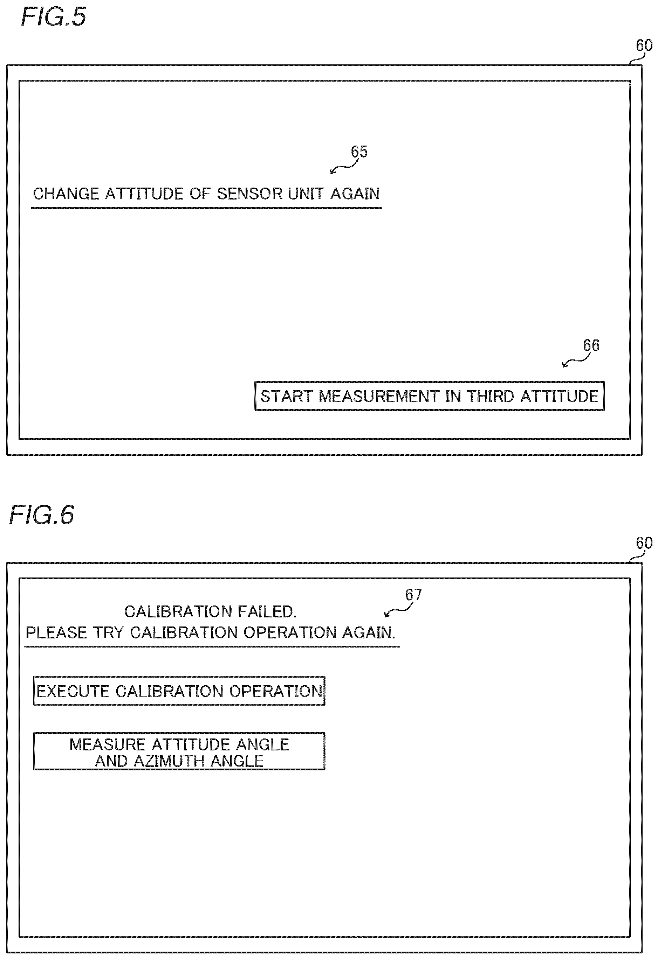

As shown in FIG. 5, after the correction values are calculated, the controller 40 notifies the user of an instruction to further change the sensor unit 1 (angular velocity sensor 10 and acceleration sensor 20) from the second attitude to the third attitude. Specifically, the controller 40 displays, on the display unit 60, textual information 65 indicating an instruction to further change from the second attitude to the third attitude. The controller 40 starts measurement of the third measurement values when an operation to start measurement in the third attitude is received from the user. For example, the controller 40 starts measurement in the third attitude when a click operation on a button 66 displayed on the display unit 60 is received by the operation unit 70. A control process to acquire the third measurement values in the third attitude is similar to the control process to acquire the first measurement values in the first attitude and the control process to acquire the second measurement values in the second attitude. Similarly, a control process to acquire the third attitude angle in the third attitude is similar to the control process to acquire the first attitude angle in the first attitude and the control process to acquire the second attitude angle in the second attitude.

Then, the controller 40 corrects the acquired third measurement values based on the correction values ($k_x$, $k_y$, and $k_z$) calculated using the above formula (5). Specifically, the controller 40 corrects the outputs of the angular velocity sensor 10 by adding the correction values ($k_x$, $k_y$, and $k_z$) to the angular velocities about the three axes of the calculated third measurement values, respectively. The controller 40 then compares the latitude value ($\lambda$) calculated by the above formula (1) using the corrected third measurement values and the third attitude angle with the actual latitude value acquired from the actual latitude measurement device 3 to determine whether or not the correction using the correction values ($k_x$, $k_y$, and $k_z$) has been performed correctly. For example, the controller 40 determines whether or not the correction using the correction values has been performed correctly based on whether the absolute value of a difference between the latitude value ($\lambda$) calculated by the above formula (1) using the corrected third measurement values and the third attitude angle and the actual latitude value is smaller than a predetermined threshold that is set in advance. When the absolute value of the difference is smaller than the predetermined threshold, the controller 40 determines that the correction using the correction values has been performed correctly, and when the absolute value of the difference is equal to or greater than the predetermined threshold, the controller 40 determines that the correction using the correction values has not been performed correctly.

For example, as shown in FIG. 6, the controller 40 displays, on the display unit 60, textual information 67 indicating that the calibration operation has failed when determining that the correction using the correction values has not been performed correctly. The controller 40 may display, on the display unit 60, the textual information 67 so as to include an indication to prompt the user to perform the calibration operation again.

Angular Velocity Sensor Correction Method

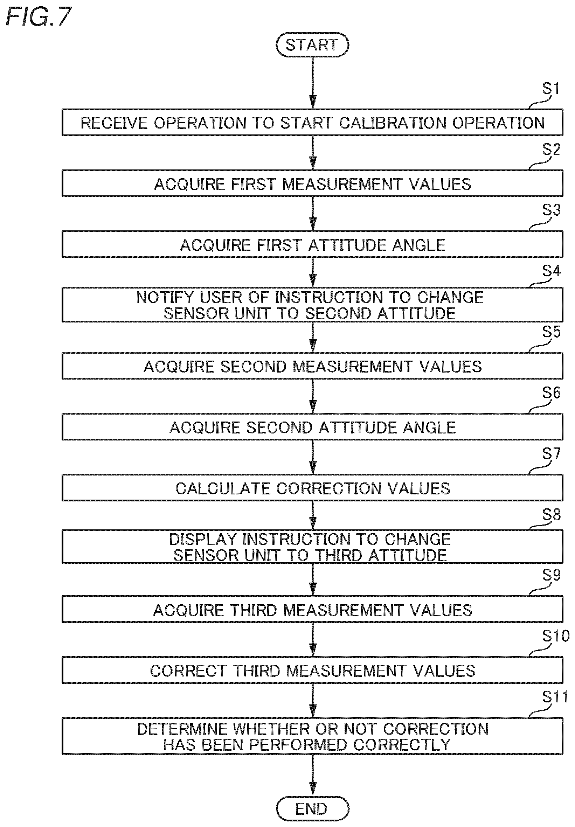

An angular velocity sensor correction method according to this embodiment is now described with reference to FIG. 7. Control process operations in step S1 to step S11 are performed by the controller 40 of the control device 2. The angular velocity sensor correction method according to this embodiment is implemented by causing the controller 40 of the control device 2 (computer) to execute the correction program 52. Some or all of processes performed by causing the controller 40 to execute the correction program 52 may be performed by hardware such as a dedicated arithmetic circuit.

First, in step S1, an operation to start the calibration operation on the operation unit 70 is received. Next, in step S2, the first measurement values including the measurement values of the angular velocities about the three axes measured by the angular velocity sensor 10 in the first attitude are acquired from the outputs of the angular velocity sensor 10. Then, in step S3, the first attitude angle that is an attitude angle in the first attitude is acquired based on the measurement values of the accelerations about the three axes measured from the outputs of the acceleration sensor 20 in the first attitude.

Next, in step S4, after the measurement values (first measurement values) of the angular velocities are acquired from the outputs of the angular velocity sensor 10 in one attitude (first attitude) among the plurality of attitudes, the user is notified of an instruction to change the sensor unit 1 (angular velocity sensor 10 and acceleration sensor 20) to an attitude (second attitude) different from the one attitude. Specifically, an instruction to change the sensor unit 1 from the first attitude to the second attitude is displayed on the display unit 60. Then, in step S5, the second measurement values including the measurement values of the angular velocities about the three axes measured by the angular velocity sensor 10 changed to the second attitude different from the first attitude are acquired from the outputs of the angular velocity sensor 10. Then, in step S6, the second attitude angle that is an attitude angle in the second attitude is acquired from the outputs of the acceleration sensor 20 in the second attitude. As described above, in step S2 and step S5, a plurality of types of measurement values of the angular velocities about each of the three axes are acquired from the outputs of the angular velocity sensor 10 that measures the angular velocities about the three axes while being changed to a plurality of attitudes. Furthermore, in step S3 and step S6, the attitude angle in each of the plurality of attitudes is acquired based on the output of the acceleration sensor 20.

Next, in step S7, the correction values for correcting the outputs of the angular velocities about the three axes of the angular velocity sensor 10 are calculated based on the latitudes in the plurality of attitudes (first attitude and second attitude) calculated using the measurement values (first measurement values and second measurement values) of the angular velocities acquired in the plurality of attitudes and the attitude angles (first attitude angle and second attitude angle) indicating the inclination of the sensor unit 1 (angular velocity sensor 10 and acceleration sensor 20) in the plurality of attitudes, and the actual latitude value. Specifically, the correction values for correcting the outputs of the angular velocity sensors 10 (angular velocity sensors 10a to 10c) are calculated based on the latitude calculated using the first measurement values acquired in step S2 and the first attitude angle acquired in step S3, the latitude calculated using the second measurement values acquired in step S5 and the second attitude angle acquired in step S6, and the actual latitude value. That is, the correction values are calculated using the measurement values of the angular velocities in the plurality of attitudes, the attitude angles in the plurality of attitudes, and the actual latitude value indicating the actual latitude at which the angular velocity sensor 10 is located, based on the latitudes being calculated using the measurement values of the angular velocities and the attitude angles.

Next, in step S8, an instruction to change the sensor unit 1 (angular velocity sensor 10 and acceleration sensor 20) to the third attitude is displayed on the display unit 60 in order to make a correction value determination. Then, in step S9, the third measurement values are acquired from the outputs of the angular velocity sensor 10 in the third attitude. Then, in step S10, the third measurement values acquired in step S9 are corrected based on the correction values calculated in step S7. Then, in step S11, the latitude calculated using the third measurement values corrected in step S10 and the third attitude angle, which is the attitude angle in the third attitude, is compared with the actual latitude value such that it is determined whether or not the correction using the correction values calculated in step S7 has been performed correctly.

The display of the instruction to change the sensor unit 1 to the third attitude in step S8 may be provided at the timing prior to the calculation of the correction values in step S7. In other words, the control process to acquire the third measurement values and the third attitude angle in the third attitude may be executed prior to the timing of calculating the correction values.

Advantageous Effects of This Embodiment

According to this embodiment, the following advantageous effects are achieved.

According to this embodiment, as described above, the correction values for correcting the outputs of the angular velocities about the three axes of the angular velocity sensor 10 are calculated based on the latitudes in the plurality of attitudes calculated using the measurement values (first measurement values and second measurement values) of the angular velocities acquired in the plurality of attitudes (first attitude and second attitude), and the attitude angles (first attitude angle and second attitude angle) indicating the inclination of the angular velocity sensor 10 in the plurality of attitudes, and the actual latitude value indicating the actual latitude at which the angular velocity sensor 10 is located. Accordingly, the outputs of the angular velocity sensor 10 can be corrected based on the latitude values calculated using the outputs and the attitude angles of the angular velocity sensor 10, and the actual latitude value, without setting the angular velocity sensor 10 at a predetermined angular velocity or a predetermined rotational position in the horizontal plane. Therefore, it is possible to calculate the correction values for correcting errors inherent to the angular velocity sensor 10 without providing a configuration for rotating the angular velocity sensor 10 in the horizontal plane and a configuration for controlling the rotational position and angular velocity of the angular velocity sensor 10. Consequently, it is possible to correct errors inherent to the angular velocity sensor 10 without using a configuration for moving the angular velocity sensor 10 at the predetermined angular velocity or to the rotational position, while reducing or preventing the complexity of the device configuration and an increase in device size.

According to this embodiment, as described above, the angular velocity sensor 10 correction method includes step S2 of acquiring the first measurement values including the measurement values of the angular velocities about the three axes from the outputs of the angular velocity sensor 10 in the first attitude, and step S5 of acquiring the second measurement values including the measurement values of the angular velocities about the three axes from the outputs of the angular velocity sensor 10 changed to the second attitude different from the first attitude. Furthermore, the angular velocity sensor 10 correction method includes step S7 of calculating the correction values based on the latitude calculated using the first measurement values and the first attitude angle, which is the attitude angle in the first attitude, the latitude calculated using the second measurement values and the second attitude angle, which is the attitude angle in the second attitude, and the actual latitude value. Accordingly, the outputs of the angular velocity sensor 10 can be corrected based on the latitude values calculated using the measurement values and the attitude angles in the two attitudes, the first attitude and the second attitude, and the actual latitude value. Therefore, the correction values for correcting errors inherent to the angular velocity sensor 10 can be easily calculated by changing the angular velocity sensor 10 to the two attitudes. Consequently, it is possible to easily correct the errors inherent to the angular velocity sensor 10 while reducing or preventing the complexity of the device configuration and an increase in device size.

According to this embodiment, as described above, the angular velocity sensor 10 correction method includes step S3 and step S6 of acquiring the attitude angles (first attitude angle and second attitude angle) in the plurality of attitudes (first attitude and second attitude) based on the measurement values of the accelerations about the three axes from the outputs of the acceleration sensor 20 that measures the accelerations about the three axes. Furthermore, the angular velocity sensor 10 correction method includes step S7 of calculating the correction values based on the latitudes in the plurality of attitudes calculated using the attitude angles acquired based on the outputs of the acceleration sensor 20 in the plurality of attitudes, and the actual latitude value. Accordingly, the values of the attitude angles in the plurality of attitudes used to calculate the correction values can be easily acquired based on the outputs of the acceleration sensor 20. Therefore, the correction values for correcting the outputs of the angular velocity sensor 10 can be easily calculated.

According to this embodiment, as described above, the angular velocity sensor 10 correction method includes step S9 of acquiring the third measurement values (measurement values for determination) from the outputs of the angular velocity sensor 10 in the third attitude (attitude for determination) different from the plurality of attitudes (first attitude and second attitude) in which the measurement values of the angular velocities are acquired to calculate the correction values. Furthermore, the angular velocity sensor 10 correction method includes step S10 of correcting the acquired third measurement values based on the correction values. In addition, the angular velocity sensor 10 correction method includes step S11 of comparing the latitude calculated using the corrected third measurement values and the third attitude angle (attitude angle for determination), which is the attitude angle indicating the inclination of the angular velocity sensor 10 in the third attitude, with the actual latitude value to determine whether or not the correction using the correction values has been performed correctly. Accordingly, the latitude calculated using the corrected third measurement values and the third attitude angle is compared with the actual latitude value such that it is determined whether or not correction of errors (biases) inherent to the angular velocity sensor 10 using the correction values has been performed correctly, and thus when it is determined that the correction has not been performed correctly, for example, the user can be prompted to recalculate the correction values. Therefore, the possibility that the angular velocity sensor 10 performs a measurement while the outputs are not correctly corrected can be reduced or prevented by determining whether or not the correction using the correction values has been performed correctly.

According to this embodiment, as described above, the angular velocity sensor 10 correction method includes step S2 and step S5 of acquiring the plurality of types of measurement values of the angular velocities from the outputs of the angular velocity sensor 10 changed to the plurality of attitudes such that the measurement values of the angular velocities in the plurality of attitudes (first attitude and second attitude) are different from each other. Accordingly, the attitude of the angular velocity sensor 10 is changed to each of the plurality of attitudes such that the measurement values of the angular velocities about the three axes in the plurality of attitudes are different from each other, and thus a correction value calculation based on the measurement values of the angular velocities can be performed more accurately. Therefore, it is possible to more accurately correct errors inherent to the angular velocity sensor 10 without using the configuration for moving the angular velocity sensor 10 at the predetermined angular velocity or to the rotational position, while reducing or preventing the complexity of the device configuration and an increase in device size.

According to this embodiment, as described above, the angular velocity sensor 10 correction method includes step S1 of receiving an operation to start the calibration operation on the operation unit 70 configured to receive an input operation. Furthermore, the angular velocity sensor 10 correction method includes step S7 of calculating the correction values based on the latitudes in the plurality of attitudes calculated using the measurement values (first measurement values and second measurement values) of the angular velocities and the attitude angles (first attitude angle and second attitude angle) in the plurality of attitudes (first attitude and second attitude) acquired in the calibration operation, and the actual latitude value. Accordingly, before the angular velocities are measured using the angular velocity sensor 10, the calibration operation is performed based on an input operation by the user, and thus the correction values for correcting the outputs of the angular velocity sensor 10 can be calculated. Therefore, the user can correct errors inherent to the angular velocity sensor 10 by the calibration operation each time the angular velocity sensor 10 performs a measurement. Consequently, even when the magnitude of the errors inherent to the angular velocity sensor 10 changes due to repeated use of the angular velocity sensor 10, the measurement values of the angular velocities corrected based on the correction values calculated by the calibration operation each time the measurement is performed can be acquired, and thus the measurement values of the angular velocities can be acquired more accurately.

According to this embodiment, as described above, the angular velocity sensor 10 correction method includes step S4 of notifying the user of an instruction to change the angular velocity sensor 10 to an attitude different from one attitude (from the first attitude to the second attitude) among the plurality of attitudes, after the measurement values of the angular velocities are acquired from the outputs of the angular velocity sensor 10 in the one attitude in the calibration operation. Accordingly, the user can recognize the timing of changing the attitude of the angular velocity sensor 10 by recognizing the notification instruction (textual information 63) to change the angular velocity sensor 10 from one attitude to a different attitude. Therefore, the user can recognize that the measurement of the angular velocities in the one attitude (first attitude) has been completed, and thus it is possible to reduce or prevent the possibility that the angular velocity sensor 10 is moved before the measurement of the angular velocities in the first attitude is completed. Consequently, inaccurate measurement of the angular velocities in the first attitude can be reduced or prevented, and thus inaccurate correction of the outputs of the angular velocity sensor 10 can be reduced or prevented.

According to this embodiment, as described above, the angular velocity sensor 10 correction method includes step S7 of calculating the correction values such that the latitude represented by $\lambda$ calculated by the following formula (1), where the measurement values of the angular velocities about the three axes in each of the plurality of attitudes are $\Omega_x$, $\Omega_y$, and $\Omega_z$, the pitch angle and the roll angle of the inclination of the angular velocity sensor 10 in the attitude angle in each of the plurality of attitudes are $\theta$ and $\varphi$, respectively, and the correction values for correcting the outputs of the angular velocities about the three axes are $k_x$, $k_y$, and $k_z$, respectively, is equal to the actual latitude value.

[Mathematical Formula 7]

$$\lambda = \sin^{-1}\left(\frac{(\Omega_x + k_x)\sin\theta - (\Omega_y + k_y)\sin\varphi\cos\theta - (\Omega_z + k_z)\cos\varphi\cos\theta}{\sqrt{(\Omega_x + k_x)^2 + (\Omega_y + k_y)^2 + (\Omega_z + k_z)^2}}\right) \dots \quad (1)$$

Accordingly, the correction values are calculated such that the latitude calculated by the calculation formula (1) using the angular velocities and the attitude angle becomes equal to the actual latitude value, and thus the correction values for the angular velocities ($\Omega_x$, $\Omega_y$, and $\Omega_z$) about the three axes can be easily calculated by using the calculation formula (1).

According to this embodiment, as described above, the angular velocity sensor 10 correction method includes step S7 of calculating the correction values for correcting the outputs of the vibratory angular velocity sensor 10 including the vibrator 11 such that the latitude calculated using the measurement values of the angular velocities acquired in each of the plurality of attitudes and the attitude angle in each of the plurality of attitudes is equal to the actual latitude value. The vibratory angular velocity sensor 10 including the vibrator 11 includes mechanical and electronic components, and thus errors (biases) inherent to the angular velocity sensor 10 become larger as compared with an optical angular velocity sensor 10. Considering this, in this embodiment, the correction values for correcting the outputs of the vibratory angular velocity sensor 10 including the vibrator 11 are calculated such that the latitude calculated using the measurement values of the angular velocities acquired in each of the plurality of attitudes and the attitude angle in each of the plurality of attitudes becomes equal to the actual latitude value. Thus, when the vibratory angular velocity sensor 10 including the vibrator 11 is used, errors inherent to the angular velocity sensor 10 can be effectively corrected.

Modified Examples

The embodiment disclosed this time must be considered as illustrative in all points and not restrictive. The scope of the present invention is not shown by the above description of the embodiment but by the scope of claims for patent, and all modifications (modified examples) within the meaning and scope equivalent to the scope of claims for patent are further included.

For example, while the example in which the first attitude angle, which is the attitude angle in the first attitude, and the second attitude angle, which is the attitude angle in the second attitude, are acquired based on the outputs of the acceleration sensor 20 that is provided integrally with the angular velocity sensor 10 has been shown in the aforementioned embodiment, the present invention is not restricted to this. In the present invention, instead of the acceleration sensor, an inclinometer may be used to acquire the attitude angles (first attitude angle and second attitude angle) in the plurality of attitudes. In such a case, the inclinometer only needs to be arranged so as to be able to measure the attitude angle of the angular velocity sensor in each of the first attitude and the second attitude, and does not need to be arranged integrally with the angular velocity sensor. Similarly, when the first attitude angle and the second attitude angle are acquired based on the outputs of the acceleration sensor, the acceleration sensor does not need to be arranged integrally with the angular velocity sensor.

While the example in which the correction values for correcting the outputs of the angular velocity sensor 10 are calculated by acquiring the measurement values (first measurement values and second measurement values) of the angular velocities and the attitude angles (first attitude angle and second attitude angle) measured in two different attitudes, the first attitude and the second attitude, has been shown in the aforementioned embodiment, the present invention is not restricted to this. In the present invention, the controller may be configured or programmed to calculate the correction values using the measurement values of the angular velocities about the three axes in each of at least two attitudes including the first measurement values in the first attitude and the second measurement values in the second attitude, the attitude angle in the attitude in which the measurement values of the angular velocities have been measured, and the actual latitude value. That is, the correction values may be calculated based on the measurement values of the angular velocities and the attitude angles measured in three or more different attitudes. Alternatively, a plurality of measurement values may be acquired in each of at least two attitudes by performing a plurality of measurements in one attitude. For example, a plurality of first measurement values and a plurality of second measurement values may be acquired by performing a plurality of measurements in each of the first attitude and the second attitude, and the correction values may be calculated based on the acquired plurality of first measurement values and the acquired plurality of second measurement values.

While the example in which the third measurement values (measurement values for determination) in the third attitude (attitude for determination) different from the first attitude and the second attitude are corrected based on the correction values such that it is determined whether or not the correction using the calculated correction values has been performed correctly has been shown in the aforementioned embodiment, the present invention is not restricted to this. In the present invention, it is not necessary to determine whether or not the correction using the correction values has been performed correctly. For example, when differences between the actual latitude value and both the latitude calculated using the first measurement values and the first attitude angle in the first attitude and the latitude calculated using the second measurement values and the second attitude angle in the second attitude are smaller than a predetermined threshold, the correction using the correction values may not be performed. That is, when at least one of the difference between the latitude calculated using the first measurement values and the first attitude angle and the actual latitude value and the difference between the latitude calculated using the second measurement values and the second attitude angle and the actual latitude value is equal to or greater than the predetermined threshold, it is determined that the calibration operation is necessary, and when both the difference between the latitude calculated using the first measurement values and the first attitude angle and the actual latitude value and the difference between the latitude calculated using the second measurement values and the second attitude angle and the actual latitude value are smaller than the predetermined threshold, the correction using the correction values may not be performed. In such a case, the user may be notified that the correction is not performed by displaying that on the display unit, for example. Furthermore, when the correction using the correction values is not performed, measurement using the attitude for determination may not be performed, and it may not be determined whether or not the correction has been performed correctly. Moreover, when it is determined that the correction of the measurement values for determination has been performed correctly, correction values may be further calculated using the first measurement values, the second measurement values, and the measurement values for determination before correction. Thus, it is possible to further reduce errors in the correction values.

When the calibration operation and the determination of whether the correction using the correction values has been performed correctly are repeatedly performed, and it is determined that the correction has not been performed correctly a predetermined number of times, it may be determined that the correction is impossible, and the user may be notified of the contents urging the user to perform correction or repair at the manufacturer. When the actual latitude value is acquired by an input operation by the user, the user may be notified that the actual latitude value may be incorrect. Alternatively, information indicating that it has been determined that the correction has not been performed correctly a predetermined number of times may be transmitted via a network such as the Internet. For example, the identification number of the sensor unit or the angular velocity sensor may be associated with information indicating that correction (calibration operation) by the user is impossible and transmitted to a server device of the manufacturer.

When three or more measurements are performed by changing the attitude of the angular velocity sensor two or more times to calculate the correction values, it may be determined whether or not the correction has been performed correctly by performing one more measurement after the correction values are calculated. In such a case, similarly, when it is determined that the correction has not been performed correctly, a notification instructing a re-calibration operation may be issued. When it is determined that the correction has not been performed correctly a predetermined number of times, as described above, a notification urging the user to perform correction or repair at the manufacturer or a notification indicating that the actual latitude value may be incorrect may be issued, or the information may be transmitted via a network. When the correction values cannot be calculated based on the measurement values in the first attitude and the second attitude, the same process as that in a case in which it is determined that the correction has not been performed correctly a predetermined number of times may be performed.

While the example in which the calibration operation is performed based on an input operation using the operation unit 70 has been shown in the aforementioned embodiment, the present invention is not restricted to this. In the present invention, regardless of the input operation, the calibration operation may be performed every time before the angular velocity sensor measures the angular velocity. For example, the calibration operation may be performed each time communication between the sensor unit (angular velocity sensor) and the control device is started. Alternatively, when communication between the sensor unit and the control device is started, a display may be provided to prompt the user to start the calibration operation. Alternatively, when the sensor unit has been used a predetermined number of times or a predetermined period of time has passed since the previous calibration operation, the calibration operation may be performed, or a display may be provided to prompt the user to start the calibration operation. Alternatively, the calibration operation may be automatically started by determining that the sensor unit (angular velocity sensor) is in a stationary state.

While the example in which the display unit 60 is provided to display instructions to the user in the calibration operation, and the operation unit 70 is provided to receive operations by the user in the calibration operation has been shown in the aforementioned embodiment, the present invention is not restricted to this. In the present invention, a touch panel serving as both the operation unit and the display unit may be provided. Alternatively, a notification (announcement) of information to the user, such as instructions in the calibration operation, may be output by information other than visual information, such as audio information. Alternatively, the start of the calibration operation by the user may be received by voice recognition, not by an operation on the operation unit.

While the example in which after the measurement values (first measurement values) of the angular velocities are acquired from the outputs of the angular velocity sensor 10 in one attitude (first attitude) among the plurality of attitudes, an instruction is issued to change the angular velocity sensor 10 to an attitude (second attitude) different from the one attitude has been shown in the aforementioned embodiment, the present invention is not restricted to this. In the present invention, the sensor unit (angular velocity sensor and acceleration sensor) may automatically change its attitude without issuing an instruction. That is, a drive may be provided to change the attitude of the sensor unit, and the sensor unit may automatically change from the first attitude to the second attitude by driving of the drive. Even in such a case, the outputs of the angular velocity sensor can be corrected based on outputs from the angular velocity sensor in a stationary state in each of the first attitude and the second attitude, and thus it is not necessary to perform a control to rotate the angular velocity sensor at a predetermined angular velocity in order to perform the correction, and the complexity of the device configuration can be reduced or prevented.

While the example in which the angular velocity sensor 10 is a vibratory angular velocity sensor 10 including a ring-shaped vibrator 11 has been shown in the aforementioned embodiment, the present invention is not restricted to this. In the present invention, the angular velocity sensor may be a mechanical angular velocity sensor including a rotor other than a vibratory angular velocity sensor, or may be an optical or fluid angular velocity sensor instead of a mechanical angular velocity sensor. In addition, when the angular velocity sensor is a vibratory angular velocity sensor, the vibrator may be configured to have a disk shape, a polygonal plate shape, a polygonal ring shape, or a polygonal shape. Alternatively, the vibrator may be configured to have a tuning fork shape or an H-shape.

While the example in which the actual latitude value indicating the actual latitude at which the sensor unit 1 (angular velocity sensor 10 and acceleration sensor 20) is located is acquired from the output of the actual latitude measurement device 3 using the GNSS has been shown in the aforementioned embodiment, the present invention is not restricted to this. In the present invention, the actual latitude value may be acquired based on an input from other than the actual latitude measurement device. For example, the actual latitude value may be acquired based on an input operation by the user on the operation unit, or may be acquired by acquiring location information via the Internet. Furthermore, the actual latitude measurement device may be provided separately from the sensor unit (angular velocity sensor). The control device (controller) may acquire the actual latitude value by communicating with the actual latitude measurement device separately from the sensor unit. The actual latitude measurement device may be temporarily arranged integrally with the sensor unit and communicate with the control device when the calibration operation is performed.

While the example in which the controller 40 of the control device 2 is configured to execute the measurement program 51 and the correction program 52 (correction program for the angular velocity sensor) stored in the storage 50 to perform a control to calculate the attitude angles ($\theta$ and $\varphi$) and the azimuth angle ($\psi$) and a control to correct the outputs of the angular velocity sensor 10 has been shown in the aforementioned embodiment, the present invention is not restricted to this. In the present invention, programs such as the measurement program for operating the controller and the correction program for the angular velocity sensor may be provided from an external server via a transmission path such as a network such as the Internet or a local area network (LAN), for example.

While the example in which the controller 40 of the control device 2, which is a computer provided separately from the angular velocity sensor 10 and the acceleration sensor 20, performs a control to correct the outputs of the angular velocity sensor 10 has been shown in the aforementioned embodiment, the present invention is not restricted to this. In the present invention, a controller integrally configured with the angular velocity sensor and the acceleration sensor may execute a control process to correct the outputs of the angular velocity sensor. For example, the angular velocity sensor and the controller that corrects the outputs of the angular velocity sensor may be arranged on a device such as a smartphone, a tablet PC, or a digital camera. Furthermore, in order to output the measurement results of the angular velocity sensor, the outputs of the angular velocity sensor may be corrected by a controller (processor) or an arithmetic circuit provided in the sensor unit in which the angular velocity sensor is arranged. In addition, a common control device (controller) may be provided for a plurality of sensor units (angular velocity sensors). In other words, the calibration operation of each of the plurality of sensor units may be performed by one controller. For example, the controller may acquire an identification number for each of the plurality of sensor units or each of the plurality of angular velocity sensors, and identify which sensor unit or angular velocity sensor the calibration operation is to be performed for. Furthermore, the calibration operation for one sensor unit may be executable by each of a plurality of controllers. In such a case, the plurality of controllers may communicate with each other or with a common storage to share history information of the calibration operation for one sensor unit.

Description of Reference Numerals

    10, 10a, 10b, 10c: angular velocity sensor
    11: vibrator
    20, 20a, 20b, 20c: acceleration sensor
    40: controller
    52: correction program (correction program for the angular velocity sensor)
    60: display unit
    70: operation unit
    100: angular velocity sensor system

**Claims**

**1.** An angular velocity sensor correction method including:

acquiring a plurality of types of measurement values of angular velocities about each of three axes from outputs of an angular velocity sensor configured to measure the angular velocities about the three axes while being changed to a plurality of attitudes; and

calculating correction values for correcting the outputs of the angular velocities about the three axes of the angular velocity sensor based on a latitude in each of the plurality of attitudes calculated using the measurement values of the angular velocities acquired in each of the plurality of attitudes and an attitude angle indicating an inclination of the angular velocity sensor in each of the plurality of attitudes, and an actual latitude value indicating an actual latitude at which the angular velocity sensor is located.

2. The angular velocity sensor correction method according to claim 1, wherein

the acquiring of the plurality of types of measurement values of the angular velocities includes:

acquiring first measurement values including the measurement values of the angular velocities about the three axes from the outputs of the angular velocity sensor in a first attitude; and
acquiring second measurement values including the measurement values of the angular velocities about the three axes from the outputs of the angular velocity sensor changed to a second attitude different from the first attitude; and

the calculating of the correction values includes calculating the correction values based on a latitude calculated using the first measurement values and a first attitude angle, which is the attitude angle in the first attitude, a latitude calculated using the second measurement values and a second attitude angle, which is the attitude angle in the second attitude, and the actual latitude value.

3. The angular velocity sensor correction method according to claim 1, further including:

acquiring the attitude angle in each of the plurality of attitudes based on measurement values of accelerations about the three axes from outputs of an acceleration sensor configured to measure the accelerations about the three axes; and
the calculating of the correction values includes calculating the correction values based on a latitude in each of the plurality of attitudes calculated using the attitude angle acquired based on the outputs of the acceleration sensor in each of the plurality of attitudes, and the actual latitude value.

4. The angular velocity sensor correction method according to claim 1, further including:

acquiring measurement values for determination from the outputs of the angular velocity sensor in an attitude for determination different from the plurality of attitudes in which the measurement values of the angular velocities are acquired to calculate the correction values;
correcting acquired measurement values for determination based on the correction values; and
comparing a latitude calculated using corrected measurement values for determination and an attitude angle for determination, which is the attitude angle indicating the inclination of the angular velocity sensor in the attitude for determination, with the actual latitude value to determine whether or not correction using the correction values has been performed correctly.

5. The angular velocity sensor correction method according to claim 1, wherein the acquiring of the plurality of types of measurement values of the angular velocities includes acquiring the plurality of types of measurement values of the angular velocities from the outputs of the angular velocity sensor changed to the plurality of attitudes such that the measurement values of the angular velocities in the plurality of attitudes are different from each other.

6. The angular velocity sensor correction method according to claim 1, further including:

receiving an operation to start a calibration operation on an operation unit configured to receive an input operation; wherein
the calculating of the correction values includes calculating the correction values based on the latitude in each of the plurality of attitudes calculated using the measurement values of the angular velocities and the attitude angle in each of the plurality of attitudes acquired in the calibration operation, and the actual latitude value.

7. The angular velocity sensor correction method according to claim 6, further including:

notifying a user of an instruction to change the angular velocity sensor to an attitude different from one attitude among the plurality of attitudes, after the measurement values of the angular velocities are acquired from the outputs of the angular velocity sensor in the one attitude in the calibration operation.

8. The angular velocity sensor correction method according to claim 1, wherein the calculating of the correction values includes calculating the correction values such that a latitude represented by $\lambda$ calculated by a following formula (1), where the measurement values of the angular velocities about the three axes in each of the plurality of attitudes are $\Omega_x$, $\Omega_y$, and $\Omega_z$, a pitch angle and a roll angle of the inclination of the angular velocity sensor in the attitude angle in each of the plurality of attitudes are $\theta$ and $\varphi$, respectively, and the correction values for correcting the outputs of the angular velocities about the three axes are $k_x$, $k_y$, and $k_z$, respectively, is equal to the actual latitude value.
[Mathematical Formula 1]

$$\lambda = \sin^{-1}\left(\frac{(\Omega_x+k_x)\sin\theta - (\Omega_y+k_y)\sin\varphi\cos\theta - (\Omega_z+k_z)\cos\varphi\cos\theta}{\sqrt{(\Omega_x+k_x)^2+(\Omega_y+k_y)^2+(\Omega_z+k_z)^2}}\right) \cdots \quad (1)$$

9. The angular velocity sensor correction method according to claim 8, wherein the calculating of the correction values includes calculating correction values for correcting outputs of a vibratory angular velocity sensor including a vibrator such that the latitude calculated using the measurement values of the angular velocities acquired in each of the plurality of attitudes and the attitude angle in each of the plurality of attitudes is equal to the actual latitude value.

10. An angular velocity sensor correction program configured to cause a computer to execute operations, the operations including:

acquiring a plurality of types of measurement values of angular velocities about each of three axes from outputs of an angular velocity sensor configured to measure the angular velocities about the three axes while being changed to a plurality of attitudes; and
calculating correction values for correcting the outputs of the angular velocities about the three axes of the angular velocity sensor based on a latitude in each of the plurality of attitudes calculated using the measurement values of the angular velocities acquired in each of the plurality of attitudes and an attitude angle indicating an inclination of the angular velocity sensor in each of the plurality of attitudes, and an actual latitude value indicating an actual latitude at which the angular velocity sensor is located.

11. An angular velocity sensor system including:

an angular velocity sensor to measure angular velocities about three axes; and
a controller configured or programmed to correct outputs of the angular velocities about the three axes of the angular velocity sensor; wherein
the controller is configured or programmed to:

acquire a plurality of types of measurement values of the angular velocities about each of the three axes measured by the angular velocity sensor in a plurality of attitudes from the outputs of the angular velocity sensor; and
calculate correction values for correcting the outputs of the angular velocities about the three axes of the angular velocity sensor based on a latitude in each of the plurality of attitudes calculated using the measurement values of the angular velocities acquired in each of the plurality of attitudes and an attitude angle indicating an inclination of the angular velocity sensor in each of the plurality of attitudes, and an actual latitude value indicating an actual latitude at which the angular velocity sensor is located.

12. The angular velocity sensor system according to claim 11, further including:

an acceleration sensor configured to measure accelerations about the three axes in order to acquire the attitude angle in each of the plurality of attitudes; wherein
the controller is configured or programmed to calculate the correction values based on a latitude in each of the plurality of attitudes calculated using the attitude angle acquired based on measurement values of the accelerations about the three axes from outputs of the acceleration sensor in each of the plurality of attitudes, and the actual latitude value.

## FIG.1

```
ANGULAR VELOCITY SENSOR SYSTEM                                          100
                                                                          1
  SENSOR UNIT                                          10                 20
    ┌─────────────────────────────┐  ┌─────────────────────────────────┐
    │ ANGULAR VELOCITY SENSOR  10a │  │ ACCELERATION SENSOR        20a  │
    │  ┌────────────────────────┐  │  │  ┌────────────────────────────┐ │
    │  │ ANGULAR VELOCITY SENSOR11│  │  │  │ ACCELERATION SENSOR       │ │
    │  │  ┌──────────────────┐  │  │  │  └────────────────────────────┘ │
    │  │  │   VIBRATOR       │  │  │  │  ┌────────────────────────────┐ 20b│
    │  │  └──────────────────┘  │  │  │  │ ACCELERATION SENSOR       │ │
    │  └────────────────────────┘  │  │  └────────────────────────────┘ │
    │  ┌────────────────────────┐10b│ │  ┌────────────────────────────┐ 20c│
    │  │ ANGULAR VELOCITY SENSOR11│  │  │  │ ACCELERATION SENSOR       │ │
    │  │  ┌──────────────────┐  │  │  │  └────────────────────────────┘ │
    │  │  │   VIBRATOR       │  │  │  └─────────────────────────────────┘
    │  │  └──────────────────┘  │  │
    │  └────────────────────────┘  │                              30
    │  ┌────────────────────────┐10c│ ┌─────────────────────────────────┐
    │  │ ANGULAR VELOCITY SENSOR11│  │  │         CONTROLLER              │
    │  │  ┌──────────────────┐  │  │  └─────────────────────────────────┘
    │  │  │   VIBRATOR       │  │  │
    │  │  └──────────────────┘  │  │
    │  └────────────────────────┘  │
    └─────────────────────────────┘
                                                                          2
  CONTROL DEVICE                             40                          50
    ┌─────────────────────────┐       ┌─────────────────────────────────┐ 51
    │      CONTROLLER          │       │ STORAGE                         │
    └─────────────────────────┘       │  ┌────────────────────────────┐ │
                                 60    │  │ MEASUREMENT PROGRAM        │ │ 52
    ┌─────────────────────────┐       │  └────────────────────────────┘ │
    │     DISPLAY UNIT         │       │  ┌────────────────────────────┐ │
    └─────────────────────────┘       │  │ CORRECTION PROGRAM         │ │
                                 70    │  └────────────────────────────┘ │
    ┌─────────────────────────┐       └─────────────────────────────────┘
    │    OPERATION UNIT        │
    └─────────────────────────┘
                                                     3
  ┌─────────────────────────────┐
  │ ACTUAL LATITUDE             │
  │ MEASUREMENT DEVICE          │
  └─────────────────────────────┘
```

## FIG.2

## FIG.3

60

61
EXECUTE CALIBRATION OPERATION

62
MEASURE ATTITUDE ANGLE
AND AZIMUTH ANGLE

## FIG.4

60

63
CHANGE ATTITUDE OF SENSOR UNIT

64
START MEASUREMENT IN SECOND ATTITUDE

*FIG.5*

60

65

CHANGE ATTITUDE OF SENSOR UNIT AGAIN

66

| START MEASUREMENT IN THIRD ATTITUDE |

*FIG.6*

60

67

CALIBRATION FAILED.
PLEASE TRY CALIBRATION OPERATION AGAIN.

| EXECUTE CALIBRATION OPERATION |

| MEASURE ATTITUDE ANGLE
AND AZIMUTH ANGLE |

*FIG.7*

```
                    ( START )
                        │
                        ▼                              S1
  ┌─────────────────────────────────────────────────┐
  │ RECEIVE OPERATION TO START CALIBRATION OPERATION │
  └─────────────────────────────────────────────────┘
                        │
                        ▼                              S2
  ┌─────────────────────────────────────────────────┐
  │         ACQUIRE FIRST MEASUREMENT VALUES          │
  └─────────────────────────────────────────────────┘
                        │
                        ▼                              S3
  ┌─────────────────────────────────────────────────┐
  │            ACQUIRE FIRST ATTITUDE ANGLE           │
  └─────────────────────────────────────────────────┘
                        │
                        ▼                              S4
  ┌─────────────────────────────────────────────────┐
  │        NOTIFY USER OF INSTRUCTION TO CHANGE       │
  │         SENSOR UNIT TO SECOND ATTITUDE            │
  └─────────────────────────────────────────────────┘
                        │
                        ▼                              S5
  ┌─────────────────────────────────────────────────┐
  │        ACQUIRE SECOND MEASUREMENT VALUES          │
  └─────────────────────────────────────────────────┘
                        │
                        ▼                              S6
  ┌─────────────────────────────────────────────────┐
  │           ACQUIRE SECOND ATTITUDE ANGLE           │
  └─────────────────────────────────────────────────┘
                        │
                        ▼                              S7
  ┌─────────────────────────────────────────────────┐
  │             CALCULATE CORRECTION VALUES           │
  └─────────────────────────────────────────────────┘
                        │
                        ▼                              S8
  ┌─────────────────────────────────────────────────┐
  │         DISPLAY INSTRUCTION TO CHANGE            │
  │          SENSOR UNIT TO THIRD ATTITUDE           │
  └─────────────────────────────────────────────────┘
                        │
                        ▼                              S9
  ┌─────────────────────────────────────────────────┐
  │         ACQUIRE THIRD MEASUREMENT VALUES          │
  └─────────────────────────────────────────────────┘
                        │
                        ▼                              S10
  ┌─────────────────────────────────────────────────┐
  │         CORRECT THIRD MEASUREMENT VALUES          │
  └─────────────────────────────────────────────────┘
                        │
                        ▼                              S11
  ┌─────────────────────────────────────────────────┐
  │      DETERMINE WHETHER OR NOT CORRECTION          │
  │       HAS BEEN PERFORMED CORRECTLY               │
  └─────────────────────────────────────────────────┘
                        │
                        ▼
                    (  END  )
```

## INTERNATIONAL SEARCH REPORT

| | International application No. |
|---|---|
| | **PCT/JP2024/008842** |

**A. CLASSIFICATION OF SUBJECT MATTER**

*G01C 19/00*(2013.01)i; *G01P 15/18*(2013.01)i; *G01P 21/00*(2006.01)i
FI:  G01C19/00 Z; G01P15/18; G01P21/00

According to International Patent Classification (IPC) or to both national classification and IPC

**B. FIELDS SEARCHED**

Minimum documentation searched (classification system followed by classification symbols)

G01C19/00-19/72; G01P15/18; G01P21/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-43546 A (DENSO CORPORATION) 16 March 2022 (2022-03-16) entire text, all drawings | 1-12 |
| A | JP 2019-20393 A (SOKEN, INC.) 07 February 2019 (2019-02-07) entire text, all drawings | 1-12 |
| A | JP 2021-67472 A (KABUSHIKI KAISHA TOYOTA CHUO KENKYUSHO) 30 April 2021 (2021-04-30) entire text, all drawings | 1-12 |
| A | WO 2010/055871 A1 (EPSON TOYOCOM CORP.) 20 May 2010 (2010-05-20) entire text, all drawings | 1-12 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/008842**

| Patent document cited in search report | | | Publication date (day/month/year) | Patent family member(s) | | | Publication date (day/month/year) |
|---|---|---|---|---|---|---|---|
| JP | 2022-43546 | A | 16 March 2022 | US 2022/0074967 A1 entire text, all drawings | | | |
| JP | 2019-20393 | A | 07 February 2019 | US 2020/0132462 A1 entire text, all drawings WO 2019/017192 A1 | | | |
| JP | 2021-67472 | A | 30 April 2021 | (Family: none) | | | |
| WO | 2010/055871 | A1 | 20 May 2010 | US 2011/0202300 A1 entire text, all drawings JP 2010-117260 A CN 102216790 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4142089 A